Europäisches Patentamt

European Patent Office

Office européen des brevets

(11) Veröffentlichungsnummer : **0 104 385**
**B1**

(12) **EUROPÄISCHE PATENTSCHRIFT**

(45) Veröffentlichungstag der Patentschrift :
16.04.86

(51) Int. Cl.⁴ : **H 02 M   3/155**

(21) Anmeldenummer : **83107902.5**

(22) Anmeldetag : **10.08.83**

(54) **Konstantstromgeber.**

(30) Priorität : **27.08.82 DE 3232014**
**27.08.82 DE 3231997**

(43) Veröffentlichungstag der Anmeldung :
**04.04.84 Patentblatt 84/14**

(45) Bekanntmachung des Hinweises auf die Patenterteilung : **16.04.86 Patentblatt 86/16**

(84) Benannte Vertragsstaaten :
**AT BE CH DE FR GB IT LI**

(56) Entgegenhaltungen :
**FR-A- 1 484 701**
**FR-A- 2 083 627**
**GB-A- 2 006 552**
**US-A- 4 280 091**
**ELECTRONICS, Band 52, Nr. 16, 2. August 1979, Seite**
**116, New York (USA); R.M. FISHER: "Floating current**
**source drives automatized test fixture".**

(73) Patentinhaber : **Siemens Aktiengesellschaft**
**Berlin und München Wittelsbacherplatz 2**
**D-8000 München 2 (DE)**

(72) Erfinder : **Kühn, Dieter, Dr.-Ing.**
**Brahmsweg 2**
**D-7552 Durmersheim (DE)**

## Beschreibung

Die Erfindung bezieht sich auf einen Konstantstromgeber mit den Merkmalen des Oberbegriffs des Anspruchs 1.

Bei einem bekannten Konstantstromgeber dieser Art (FR-A 1 484 701) wird der Ausgangsstrom einer Referenzspannungs- bzw. Stromquelle über einen Schalter derart getastet, daß eine konstante Ausgangsspannung bzw. Ausgangsstrom abhängig vom Tastverhältnis entsteht. Die Tastung des Schalters ist gesteuert von einem Sägezahngenerator, der in seiner Frequenz und in seiner Impulslänge einstellbar ist. Die erforderliche Gleichspannung am Ausgang wird mit einer Siebschaltung erzeugt. Durch die Tastung der Referenzquelle mit einem mechanischen Schalter sind der Einstellmöglichkeit des Stromwertes Grenzen gesetzt.

Es ist weiterhin bereits bekannt (Tietze/Schenk: « Halbleiter-Schaltungstechnik », 5. Auflage, Springer-Verlag, 1980, Seiten 246 und 247), bei einem Konstantstromgeber einem Transistor eine Steueranordnung vorzuschalten, mit der der Strom durch die Kollektor-Emitter-Strecke des Transistors steuerbar ist. Die Steueranordnung besteht bei dieser bekannten Schaltung aus einem Operationsverstärker, an dessen einem Eingang eine Steuerspannung anliegt und dessen Ausgang auf die Basis des genannten Transistors geführt ist. Bei diesem bekannten Konstantstromgeber ist zwar der Wert des Ausgangsstromes durch den Transistor mittels der am Operationsverstärker anliegenden Steuerspannung einstellbar, jedoch ist hinsichtlich der Genauigkeit der Einstellung die endliche Stromverstärkung sowohl des Operationsverstärkers als auch des Transistors zu beachten.

Der Erfindung liegt die Aufgabe zugrunde, einen Konstantstromgeber zu schaffen, der mit geringem Schaltungsaufwand eine genaue Einstellung eines Stromwertes über einen großen Einstellbereich gewährleistet.

Zur Lösung dieser Aufgabe weist ein Konstantstromgeber der eingangs genannten Art erfindungsgemäß die kennzeichnenden Merkmale des Anspruchs 1 auf.

Der erfindungsgemäße Konstantstromgeber erlaubt in vorteilhafter Weise eine äußerst genaue Einstellung des gewünschten Stromwertes, da mit dem Ausgangssignal der Zählschaltung vorgegebene kleine Spannungssprünge erzeugt werden können, die in der Schaltanordnung als Ladungspulse zur Erzeugung eines Konstantstroms ausgenutzt werden. Die Frequenz der Spannungssprünge kann, abhängig vom gewünschten Stromwert, beispielsweise im Bereich von 1 Hz bis 100 kHz, fein gestuft variiert werden. Das Ausgangssignal der Zählschaltung wird über den Digital-Analog-Wandler zu einer Analogspannung verarbeitet, die von einem Minimalwert (Zählerstand 0) bis zu einem Maximalwert (Zählerstand beispielsweise 1 023) ansteigt. Jeder einzelne Zähltakt der Zählschaltung bewirkt hier den definierten Spannungssprung. Die Zählschaltung ist mit der Schaltanordnung derart verbunden, daß bei einem definierten Zählwert — beispielsweise beim Zählerstand 0 — die Schaltanordnung bzw. die Ladungszustände der Kondensatoren mittels eines kurzen Impulses über ihren Schalteingang in den Anfangszustand versetzt werden. Durch die Siebschaltung am Ausgang der Schaltanordnung wird aus den beschriebenen Spannungsverläufen der Analogspannung ein Konstantstrom mit dem an der Rechenschaltung eingestellten Stromwert gewonnen und dem Ausgang des Konstantstromgebers zur Verfügung gestellt.

In besonders vorteilhafter Weise ist bei einer Ausführungsform des erfindungsgemäßen Konstantstromgebers die Schaltanordnung mit einem Operationsverstärker aufgebaut, dessen erster Eingang über eine Widerstandsanordnung mit dem ersten Eingang der Schaltanordnung verbunden ist, dessen zweiter Eingang nach Masse gelegt ist, der einen zwischen dem Ausgang und dem ersten Eingang angeschlossenen Rückkopplungswiderstand aufweist und dessen Ausgang über einen Kondensator auf einen Schaltungspunkt als Eingang eines Diodenschalters geführt ist, dessen Ausgang den Ausgang der Schaltanordnung darstellt, von vom ersten Eingang zum Ausgang der Schaltanordnung ist ein Umladekondensator geführt.

Um die erforderlichen Ladungsmengen bei der Umladung der Kondensatoren in der Schaltanordnung nach der beschriebenen Ausführungsform genau abzugleichen, ist zwischen den ersten Eingang der Schaltanordnung und den ersten Eingang des Operationsverstärkers ein veränderbarer Widerstand geschaltet.

Die Umschaltung des Ladezustandes kann in vorteilhafter Weise mit einer Anordnung durchgeführt werden, bei der der Diodenschalter eine in Durchlaßrichtung geschaltete Diode und einen vom Schaltungspunkt nach Masse gelegten Schalter enthält, der vom Signal am Schalteingang der Schaltanordnung angesteuert ist. Der Schalter kann hier in einfacher Weise als MOS-Schalter aufgebaut sein, der ohne großen Schaltungsaufwand vom Impuls am zweiten Ausgang der Zählschaltung angesteuert werden kann.

Zur genauen Eingabe des gewünschten Stromwertes in den erfindungsgemäßen Konstantstromgeber ist dem Impulsgeber eine Rechenschaltung vorgeschaltet, in die der gewünschte Stromwert des Konstantstromgebers eingebbar ist und die hieraus die Frequenz des Impulssignals ermittelt. Die Einstellung der Impulsfrequenz des Ausgangsimpulses des Impulsgebers ist mittels der Rechenschaltung gemäß dieser Ausführungsform auf einfache Weise durchzuführen, wobei der Wert des gewünschten Konstantstroms am Ausgang durch einen Zahlenwert mit Mantisse und Exponent am Eingang der Rechenschaltung vorgebbar ist.

Die Erfindung wird anhand der Figur erläutert, wobei

Figur 1 ein erstes Ausführungsbeispiel eines an sich bekannten Konstantstromgebers und

Figur 2 ein Impulsdiagramm von in diesem Ausführungsbeispiel auftretenden Impulsen sowie

Figur 3 ein zweites Ausführungsbeispiel des erfindungs gemäßen Konstantstromgebers und

Figur 4 ein Diagramm von Spannungsverläufen im zweiten Ausführungsbeispiel darstellt.

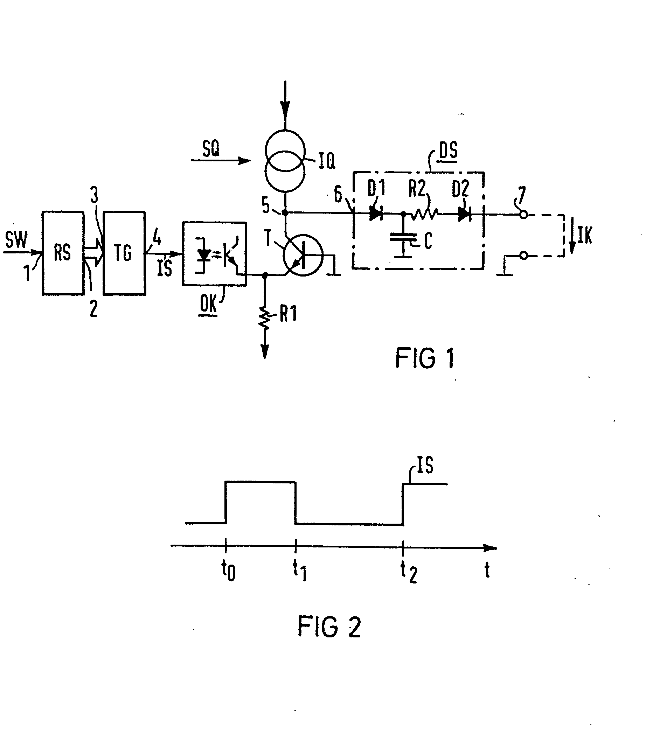

Bei dem in der Figur 1 dargestellten Ausführungsbeispiel eines Konstantstromgebers ist eine Rechenschaltung RS vorhanden, an deren Eingang 1 ein dem gewünschten Stromwert entsprechender Zahlenwert SW, beispielsweise mit Exponent und Mantisse, eingegeben wird. Der Ausgang 2 der Rechenschaltung RS ist mit einem Eingang 3 eines Impulsgebers IG verbunden, der an seinem Ausgang das Impulssignal IS abgibt. Über einen Opto-Koppler OK gelangt das Impulssignal IS an den Emitter eines Transistors T, dessen Kollektor von einer Stromquelle IQ angesteuert wird und dessen Emitter weiterhin über einen Widerstand R1 mit dem anderen Pol der Stromquelle IQ verbunden ist ; die Basis des Transistors T ist an Masse gelegt. Der Ausgangsstrom der Stromquelle kann mittels eines Strombereichssignals SQ in bekannter Weise umschaltbar gemacht werden, um somit eine optimale Anpassung an den gewünschten Stromwert zu gewährleisten.

Zwischen dem Kollektor des Transistors T und der Stromquelle IQ ist an einem Schaltungspunkt 5 ein Eingang 6 einer Diodenschaltung DS angeschlossen, die eine Reihenschaltung einer Diode D1, eines Widerstandes R2 und einer weiteren Diode D2 enthält und bei der zwischen der Diode D1 und dem Widerstand R2 ein Glättungskondensator C nach Masse gelegt ist. Der Ausgang der Diodenschaltung DS ist mit dem Ausgang 7 des dargestellten Konstantstromgebers verbunden. Ein gewünschter Konstantstrom IK ist somit zwischen dem Ausgang 7 und Masse abnehmbar.

Durch Eingabe eines gewünschten Stromwertes (Zahlenwert SW) — beispielsweise im Bereich von 0,5 pA bis 5 mA — in die Rechenschaltung RS wird am Ausgang 2 der Rechenschaltung RS ein binäres Signal erzeugt, das über den Eingang 3 den Impulsgeber IG derart steuert, daß ein entsprechendes Impulssignal IS in Frequenz und Impulsdauer am Ausgang 4 zur Verfügung gestellt wird. Hierzu ist zur näheren Erläuterung auf die Figur 2 zu verweisen, in der ein Beispiel eines solchen Impulssignals IS dargestellt ist. Die Längen der Impulsdauer ($t_0$ bis $t_1$) und der Impulspausen ($t_1$ bis $t_2$) stellen hier das Maß für den Stromwert am Ausgang 7 des Konstantstromgebers dar. Mit Hilfe der über den Opto-Koppler OK übertragenen Impulse wird der Strom durch den Transistor T derart gesteuert, daß am Schaltungspunkt 5 zwischen dem Transistor T und der Stromquelle IQ Ladungspulse abnehmbar sind, die in der Diodenschaltung DS weiterverarbeitet werden.

In der Diodenschaltung DS ist der Glättungskondensator C und der Widerstand R2 so bemessen, daß sich Integrationszeitkonstanten für die Ladungspulse am Eingang 6 der Diodenschaltung ergeben, die beispielsweise im Bereich bis 1 000 sec liegen können. Die Integrationszeitkonstante wird vom Widerstand R2, aber auch vom differentiellen spannungsabhängigen Widerstand der Diode D2 bestimmt, der außerordentlich groß werden kann, so daß die beschriebene große Zeitkonstante erreichbar ist.

Aufgrund der Integration der Ladungspulse in der Diodenschaltung DS steht somit am Ausgang 7 ein konstanter Strom IK mit genau vorgegebenem Stromwert zur Verfügung, mit dem beispielsweise Testschaltungen betrieben werden können, bei denen ein konstanter Strom vorausgesetzt werden muß.

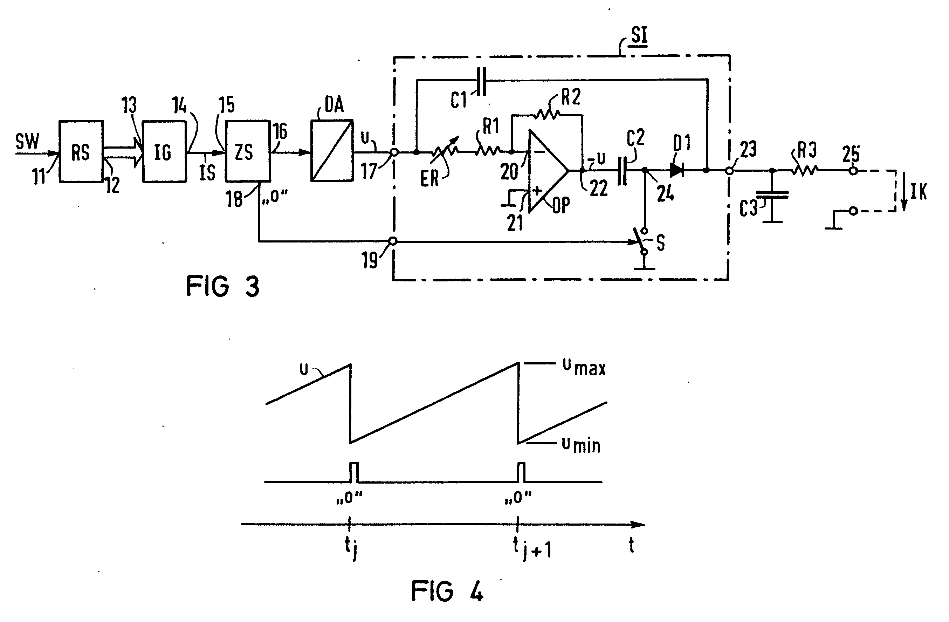

Bei dem in der Figur 3 dargestellten Ausführungsbeispiel des Konstantstromgebers ist eine Rechenschaltung RS vorhanden, an deren Eingang 11 ein Zahlenwert SW anliegt, mit dem der Stromwert des Konstantstroms vorgebbar ist. Beispielsweise kann der entsprechende Zahlenwert mit Mantisse und Exponent direkt in die Rechenschaltung RS eingegeben werden. Der Ausgang 12 der Rechenschaltung RS ist mit einem Eingang 13 eines Impulsgebers IG verbunden, an dessen Ausgang 14 ein Impulssignal IS anliegt. Das Impulssignal IS, dessen Frequenz somit durch den Zahlenwert SW festgelegt ist, ist auf einen Eingang 15 einer Zählschaltung ZS geführt. Der erste Ausgang 16 der Zählschaltung ZS ist über einen Digital-Analog-Wandler DA an einen ersten Eingang 17 einer Schaltanordnung SI angeschlossen. An diesem Eingang 17 liegt eine Analogspannung U an, deren Spannungswert vom Zählerstand am Ausgang 16 der Zählschaltung ZS abhängig ist. Ein zweiter Ausgang 18 der Zählschaltung ZS ist auf einen Schalteingang 19 der Schaltanordnung SI geführt.

Die Schaltanordnung SI enthält einen Operationsverstärker OP, an dessen erstem Eingang 20 (negativer Eingang) die Analogspannung U über den ersten Eingang 17 der Schaltanordnung SI, über einen veränderbaren Widerstand ER und einen Festwiderstand R1 geführt ist. Der zweite Eingang 21 (positiver Eingang) liegt an Masse. Vom ersten Eingang 20 zum Ausgang 22 des Operationsverstärkers OP ist ein Rückkopplungswiderstand R2 gelegt. Der Ausgang 22 des Operationsverstärkers OP, an dem eine Analogspannung -U anliegt, ist weiterhin über einen Kondensator C2 und eine Diode D1 eines Diodenschalters auf den Ausgang 23 der Schaltanordnung SI geführt. Zwischen den Ausgang 23 und den ersten Eingang 17 der Schaltanordnung SI ist intern ein Umladekondensator C1 geschaltet. An einem Schaltungspunkt 24 zwischen dem Kondensator C2 und der Diode D1 ist ein Schalter S als weiteres Bestandteil des Diodenschalters angeschlossen; der Schalter S liegt mit seinem anderen Schaltkontakt an Masse. Der Schalter S wird über den Schalteingang 19 vom zweiten Ausgang 18 der Zählschaltung ZS angesteuert; er kann beispielsweise als MOS-Schalter aufgebaut sein. Am Ausgang 23 der Schaltanordnung SI ist eine Siebschaltung angeschaltet, die aus einem nach Masse gelegten Kondensator C3 und einem zum Ausgang 25 geführten Widerstand R3 besteht. Am Ausgang 25 des dargestellten Konstantstromgebers ist der Konstantstrom IK nach Masse abnehmbar.

Zur Erläuterung der Funktionsweise des dargestellten Ausführungsbeispiels wird ergänzend auf die Figur 4 verwiesen. Das in seiner Frequenz vom Zahlenwert SW am Eingang 11 der Rechenschaltung RS und somit vom gewünschten Stromwert abhängige Impulssignal IS taktet die Zählschaltung ZS derart, daß diese periodisch beispielsweise von 0 bis 1 023 zählt. Dabei steigt die Analogspannung U am Ausgang des nachgeschalteten Digital-Analog-Wandlers DA periodisch vom Minimalwert zu ihrem Maximalwert an. Jeder einzelne Zähltakt bewirkt am Ausgang des Digital-Analog-Wandlers DA einen Spannungssprung (beispielsweise 10 mV) und trägt über den Kondensator C1 der Schaltanordnung SI mit einer kleinen Ladungsmenge (hier ca. $10^{-13}$ As) zu dem Konstantstrom IK am Ausgang 25 des Konstantstromgebers bei.

Die Zählschaltung ZS bewirkt, daß beim Übergang des Zählwerts von 1 023 (Maximalwert) nach 0 (Minimalwert) die Analogspannung U ebenfalls vom Maximalwert auf den Minimalwert zurückspringt und somit der Kondensator C1 wieder auf seinen Anfangswert umgeladen wird. Zur Neutralisation der Ladungsbilanz auf dem Ausgangskondensator C3 der Siebschaltung wird während dieser Umladung des Kondensators C1 über den Diodenschalter D1, S eine gleich große, entgegengesetzt gepolte Ladungsmenge vom Kondensator C2 am Ausgang 22 des Operationsverstärkers OP auf den Ausgangskondensator C3 der Siebschaltung geführt; dies geschieht durch Öffnen des Schalters S während der Dauer eines kurzen Impulses am Schalteingang 19. Um hier eine genaue Ladungskompensation bei der Umladung des Umladekondensators C1 zu erreichen, kann die Spannung am Ausgang 22 des Operationsverstärkers OP mittels des veränderlichen Widerstands ER abgeglichen werden.

Der Verlauf der Analogspannung U am Ausgang des Digital-Analog-Wandlers DA ist aus der Figur 4 zu ersehen, wobei während des Wechsels vom Maximalwert $U_{max}$ zum Minimalwert $U_{min}$ jeweils der kurze Impuls « 0 » am zweiten Ausgang 18 der Zählschaltung ZS erzeugt wird, der die Neutralisation der Ladungsbilanz am Ausgangskondensator C3 der Siebschaltung bewirkt.

Mit dem erfindungsgemäßen Konstantstromgeber kann somit auf einfache Weise mit einem vorgebbaren Zahlenwert ein äußerst genauer Konstantstrom erzeugt werden, der beispielsweise als Teststrom bei der Prüfung von elektrischen Schaltungen herangezogen werden kann.

**Patentansprüche**

1. Konstantstromgeber mit
einem Impulsgeber (IG), der ein Impulssignal (IS) mit vorgebbarer Frequenz erzeugt, und mit
Schaltungsmitteln, über die ein konstanter Gleichstrom erzeugbar ist, mit einem vom Impulssignal (IS) abhängigen Stromwert, dadurch gekennzeichnet, daß
dem Impulsgeber (IG) eine Rechenschaltung (RS) vorgeschaltet ist, in die der gewünschte Stromwert des Konstantstromgebers eingebbar ist und die hieraus eine von gewünschten Stromwert abhängige Frequenz des Impulssignals (IS) ermittelt,
eine Zählschaltung (ZS) vorhanden ist, die dem Impulsgeber (IG) nachgeschaltet ist und die Impulse des Impulssignals (IS) von einem Minimalwert bis zu einem vorgegebenen Maximalwert periodisch zählt, wobei
an einem ersten Ausgang (16) der jeweilige Zählwert und
an einem zweiten Ausgang (18) jeweils ein kurzer Impuls « 0 » während des Wechsels vom Maximalwert auf den Minimalwert der Zählschaltung (ZS) ansteht, und
eine Schaltanordnung (SI) vorhanden ist,
deren erster Eingang (17) über einen Digital/Analog-Wandler (DA) mit dem ersten Ausgang (16) und deren Schalteingang (19) mit dem zweiten Ausgang (18) der Zählschaltung (ZS) verbunden ist und
deren Ausgang (23) über eine Siebschaltung (C3, R3) auf den Ausgang (25) des Konstantstromgebers geführt ist,
wobei die Ladungsbilanz des Kondensators (C3) von der über einen Umladekondensator (C1) geführten Spannung am ersten Eingang (17) abhängig ist
und der Umlade Kondensator (C1) über einer Diodenschalter (D1, S) während des am zweiten Eingang (19) anliegenden kurzen Impulses (« 0 ») rückgesetzt wird.

2. Konstantstromgeber nach Anspruch 1, dadurch gekennzeichnet, daß
die Schaltanordnung (SI) einen Operationsverstärker (OP) enthält,
dessen erster Eingang (20) über eine Widerstandsanordnung (ER, R1) mit dem ersten Eingang (17) der Schaltanordnung (SI) verbunden ist,
dessen zweiter Eingang (21) nach Masse gelegt ist,
der einen zwischen dem Ausgang (22) und dem ersten Eingang (20) angeschlossenen Rückkopplungswiderstand (R2) aufweist und
dessen Ausgang (22) über einen Kondensator (C2) auf einen Schaltungspunkt (24) als Eingang des Diodenschalters (D1, S) geführt ist, dessen Ausgang den Ausgang (23) der Schaltanordnung (SI) darstellt, und daß
vom ersten Eingang (17) zum Ausgang (13) der Schaltanordnung (SI) der Umladekondensator (C1) geführt ist.

3. Konstantstromgeber nach Anspruch 2, dadurch gekennzeichnet, daß zwischen den ersten Eingang (17) der Schaltanordnung (SI) und den ersten Eingang (20) des Operationsverstärkers (OP) ein veränderbarer Widerstand (ER) geschaltet ist.

## Claims

1. A constant current source with

a pulse generator (IG) which produces a pulse signal (IS) of predetermined frequency and

circuit means producing a constant direct current of a value dependent upon the pulse signal (IS), characterised in that

the pulse generator (IG) is preceded by a calculating circuit (RS) into which is fed the desired current value of the constant current source and which establishes, from this current value, a frequency of the pulse signal (IS) dependent upon the desired current value ;

a counter circuit (ZS) is connected to the output of the pulse generator (IG) and periodically counts the pulses of the pulse signal (IS) from a minimum value to a given maximum value where :

the counting value occurs at a first output (16) ; and

a short pulse (« 0 ») occurs at a second output (18) during the change from the maximum value to the minimum value of the counting circuit (ZS) ; and

a switching arrangement (SI)

the first input (17) of which is connected via a digital/analogue converter (DA) to the first output (16) and whose switching input (19) is connected to a second output (18) of the counting circuit (ZS) ; and

whose output (23) leads via a filter circuit (C3, R3) to the output (25) of the constant current source ;

where the charge balance of the capacitor (C3) is dependent upon the voltage conducted via a recharging capacitor (C1) from the first input (17) ;

and the recharging capacitor (C1) is reset via a diode switch (D1, S) during the short pulse (« 0 ») which occurs at the second input (19).

2. A constant current source as claimed in Claim 1, characterised in that

the switching arrangement (SI) contains an operational amplifier (OP)

whose first input (20) is connected via a resistance arrangement (ER, R1) to the first input (17) of the switching arrangement (SI) ;

whose second input (21) is connected to earth ;

which comprises a feedback resistor (R2) connected between the output (22) and the first input (20) ; and

whose output (22) leads via a capacitor (C2) to a circuit point (24) as input of the diode switch (D1, S) whose output represents the output (23) of the switching arrangement (SI) ; and that

the recharging capacitor (C1) leads from the first input (17) to the output (13) of the switching arrangement (SI).

3. A constant current source as claimed in Claim 2, characterised in that a variable resistor (ER) is connected between the first input (17) of the switching arrangement (SI) and the first input (20) of the operational amplifier (OP).

## Revendications

1. Générateur de courant constant comportant :

un générateur d'impulsions (IG) qui délivre un signal impulsionnel (IS) possédant une fréquence pouvant être prédéterminée, et

des moyens de commutation, par l'intermédiaire desquels on peut obtenir un courant continu constant possédant une intensité dépendant du signal impulsionnel (IS), caractérisé par le fait que

en amont du générateur d'impulsions (IG) se trouve monté un circuit de calcul (RS), dans lequel l'intensité désirée du générateur de courant constant peut être introduite et qui détermine, à partir de là, une fréquence du signal impulsionnel (IS), qui dépend de l'intensité désirée,

il est prévu un circuit de comptage (ZS) qui est branché en aval du générateur d'impulsions (IG) et qui compte périodiquement les impulsions du signal impulsionnel (IS) depuis une valeur minimale jusqu'à une valeur maximale prédéterminée, la valeur de comptage respective et une brève impulsion (« 0 ») étant appliquées respectivement

à une première sortie (16), et

à une seconde sortie (18), pendant le passage du circuit de comptage (ZS) de la valeur maximale à la valeur minimale, et

il est prévu un montage (SI),

dont la première entrée (17) est reliée par l'intermédiaire d'un convertisseur numérique/analogique (D1) à la première sortie (16) du circuit de comptage (ZS) et dont l'entrée de commutation (19) est reliée à la seconde sortie (18) du circuit de comptage (ZS), et

dont la sortie (23) est reliée par l'intermédiaire d'un circuit de lissage (C3, R3) à la sortie (25) du générateur de courant constant,

le bilan de charge du condensateur (C3) dépendant de la tension, envoyée par l'intermédiaire d'un condensateur d'inversion de charge (C1) et présent sur la première entrée (17) et,

le condensateur d'inversion de charge (C) étant ramené à sa valeur initiale par l'intermédiaire d'un commutateur à diodes (D1, S) pendant la brève impulsion (« 0 ») appliquée à la seconde entrée (19).

2. Générateur de courant constant suivant la revendication 1, caractérisé par le fait que :

le montage (SI) contient un amplificateur opérationnel (OP),

dont la première entrée (20) est reliée par l'intermédiaire d'un dispositif à résistances (ER, R1) à la première entrée (17) du dispositif de commutation (SI),

dont la seconde entrée (21) est raccordée à la masse,

qui possède une résistance de réaction (R2) branchée entre la sortie (22) et la première entrée (20), et

dont la sortie (22) est reliée par l'intermédiaire d'un condensateur (C2) à un point (24) du circuit formant entrée du commutateur à diodes (D1, S), dont la sortie constitue la sortie (23) du montage (SI), et que

le condensateur d'inversion de charge (C1) est branché entre l'entrée (17) et la sortie (13) du montage (SI).

3. Générateur de courant constant suivant la revendication 2, caractérisé par le fait qu'une résistance variable (ER) est branchée entre la première entrée (17) du montage (SI) et la première entrée (20) de l'amplificateur opérationnel (ER).

FIG 1

FIG 2

FIG 3

FIG 4

0 104 385